# EUROPÄISCHE PATENTSCHRIFT

(11) **EP 1 175 702 B1**
(45) Veröffentlichungstag und Bekanntmachung des Hinweises auf die Patenterteilung: **16.06.2004**
(21) Anmeldenummer: 00938508.9
(22) Anmeldetag: 19.04.2000
(51) Int. Cl.: H01M 2/00

(54) **BEFEUCHTUNGSVORRICHTUNG FÜR BRENNSTOFFZELLE, VERFAHREN ZUR BEFEUCHTUNG EINER BRENNSTOFFZELLENMEMBRAN UND BRENNSTOFFZELLE**
HUMIDIFYING DEVICE FOR A FUEL CELL, METHOD FOR HUMIDIFYING A FUEL CELL MEMBRANE AND FUEL CELL
DISPOSITIF D'HUMIDIFICATION DESTINE A UNE PILE A COMBUSTIBLE, PROCEDE D'HUMIDIFICATION D'UNE MEMBRANE DE PILE A COMBUSTIBLE ET PILE A COMBUSTIBLE CORRESPONDANTE

(30) Priorität: 19.04.1999 DE 19918850
(43) Veröffentlichungstag der Anmeldung: 30.01.2002
(73) Patentinhaber: P 21-Power for the 21st Century GMBH, 85649 Brunntal (DE)
(72) Erfinder: HERDEG, Wolfgang, D-72141 Walddorfhäslach (DE); KLOS, Holger, D-81541 München (DE); SATTLER, Martin, D-97486 Königsberg (DE); HESS, Sabine, D-80469 München (DE); WILHELM, Hans-Dieter, D-61267 Neu-Anspach (DE); HABRICH, Jürgen, D-63512 Hainburg (DE); ECK, Karl, D-60318 Frankfurt (DE); KEUTZ, Markus, D-64380 Rossdorf (DE); ZAPP, Thomas, D-44265 Dortmund (DE)
(74) Vertreter: Müller, Thomas, Dipl.-Ing.
(86) Internationale Anmeldenummer: PCT/DE2000/001298
(87) Internationale Veröffentlichungsnummer: WO 2000/063982

(56) Entgegenhaltungen:
- DE-A- 4 201 632
- US-A- 5 360 679
- US-A- 5 432 020
- US-A- 5 543 238

## Beschreibung

Die vorliegende Erfindung betrifft eine Brennstoffzelle sowie ein Verfahren zur Befeuchtung einer Brennstoffzellenmembran.

In einer Brennstoffzelle wird durch eine chemische Reaktion Strom erzeugt. Dabei wird Brennstoff und Sauerstoff in elektrische Energie und Wasser als Reaktionsprodukt umgewandelt. Eine Brennstoffzelle bzw. PEM-Brennstoffzelle besteht im wesentlichen aus einer Anode, einer Membran und einer Kathode, die zusammen Membran-Elektroden-Einheit bzw. MEA genannt werden. Die Membran besteht aus porösem, elektrisch leitfähigem Material und ist zwischen der Anode und Kathode angeordnet, um Ionen auszutauschen. Auf der Seite der Anode wird ein Brennstoff wie z.B. Wasserstoff oder Methanol zugeführt, während auf der Seite der Kathode Sauerstoff oder Luft zugeführt wird. An der Anode werden durch katalytische Reaktionen Protonen bzw. Wasserstoffionen erzeugt, die sich durch die Membran zur Kathode bewegen. An der Kathode reagieren die Wasserstoffionen mit dem Sauerstoff, und es bildet sich Wasser.

Die Reaktion an den Elektroden ist wie folgt:

| | |
|---|---|
| Anode | H₂ → 2H⁺ + 2e⁻ |
| Kathode | ½O₂ + 2H⁺ + 2e⁻ → H₂O |

Somit wird an den Elektroden Strom erzeugt, der einem Verbraucher zugeführt wird.

Derartige Brennstoffzellen sind aus vielfältigen Veröffentlichungen bekannt. Es besteht jedoch das Problem, daß die Membran bzw. die MEA feucht gehalten werden muß. Beim Austrocknen der Membran würde diese ihre lonenleitfähigkeit verlieren, und die Brennstoffzelle wäre nicht mehr funktionsfähig.

In der US 5,432,020 wird daher vorgeschlagen, fein zerstäubtes Wasser mittels einer Einspritzdüse dem Gasstrom zur Brennstoffzelle hinzuzufügen. Dadurch wird die Membran gekühlt und feucht gehalten.

Dabei besteht jedoch das Problem, daß ein Wasservorrat mitgeführt werden muß. Der Wasservorrat erfordert Platz und weitere Maßnahmen, wie beispielsweise einen Schutz vor Einfrieren, was mit zusätzlichen Kosten verbunden ist.

Aus der DE 42 01 632 ist eine Lösung bekannt, bei der in einer Kathodengaszufuhr und in einer Anodengaszufuhr zu einer Brennstoffzelle jeweils eine Befeuchtungsanordnung vorgesehen ist, die eine semipermeable Membran aufweist, wobei auf der einen Seite der Membran das Kathodengas bzw. Anodengas entlang geführt wird, während auf der jeweils anderen Seite das Kathodenabgas bzw. Anodenabgas in entgegengesetzter Richtung geführt wird. Dabei wird jeweils der gesamte zur Brennstoffzelle geführte Gasstrom und der gesamte aus der Brennstoffzelle abgeführte Gasstrom durch diese Befeuchtungsanordnung geleitet. Bei der bekannten Lösung ist es jedoch nicht möglich, dass eine Regelung der Feuchtigkeit, die unterschiedliche Ausgangsfeuchten des zur Brennstoffzelle hingeführten Gasstromes berücksichtigt, vorgenommen wird.

Es ist daher die Aufgabe der vorliegenden Erfindung, eine Brennstoffzelle, mit einer Befeuchtungsvorrichtung zu schaffen und ein Verfahren zur Befeuchtung einer Brennstoffzellenmembran anzugeben, wobei auf platzsparende Weise kostengünstig eine wirksame Befeuchtung der Brennstoffzellenmembran erfolgt.

Diese Aufgabe wird gelöst durch die Brennstoffzelle gemäß Patentanspruch 1 und das Verfahren zur Befeuchtung einer Brennstoffzellenmembran gemäß Patentanspruch 5. Weitere vorteilhafte Merkmale, Aspekte und Details der Erfindung ergeben sich aus den abhängigen Ansprüchen, der Beschreibung und der Zeichnung.

Die erfindungsgemäße Brennstoffzelle umfaßt eine Befeuchtungsvorrichtung, aufweisend eine semipermeable Membran, die an das Kathodenabgas einer Brennstoffzelle gekoppelt ist, wobei sich das Kathodenabgas auf einer Seite der Membran befindet, sowie ein Verbindungselement, das zum einen eine Gasleitung aufweist und die andere Seite der Membran leitungsmäßig mit der Kathoden- oder Anodengaszufuhr verbindet, so daß im Betrieb Wasserdampf die Membran durchdringt, um das der Anode oder der Kathode zugeführte Gas, z.B. Aussenluft oder Sauerstoff, zu befeuchten. Weiterhin ist erfindungsgemäß eine Dosiereinheit zur Befeuchtung des Gasstroms zur Kathode vorgesehen. Dadurch kann eine Dosierung mit der jeweils in Abhängigkeit vom Betriebszustand der Brennstoffzelle benötigten Wassermenge erfolgen. Die Befeuchtungsvorrichtung ermöglicht eine zuverlässige Befeuchtung der Membran-Elektroden-Einheit einer Brennstoffzelle, wobei sie kompakt und kostengünstig herstellbar ist. Sie ist daher besonders für die Serienfertigung geeignet.

Vorteilhafterweise umfaßt die Befeuchtungsvorrichtung eine Vakuumpumpe zur Aufrechterhaltung eines Konzentrationsgefälles der Feuchtigkeit zwischen beiden Seiten der Membran. Dadurch wird ein besonders effektiver Austausch der Feuchtigkeit durch die Membran erreicht.

Weiterhin kann ein Behälter vorgesehen sein, der zur Aufnahme und/oder Zwischenspeicherung von Wasserdampf bzw. Wasser dient.

Vorteilhafterweise ist die Dosiereinheit mit einem Regelkreis verbunden, in dem die Feuchtigkeit der Kathodenzuluft bzw. die Feuchtigkeit des Gases, das zur Kathode geführt wird, gemessen wird. Dadurch kann eine besonders exakte Dosierung erfolgen.

Bei dem erfindungsgemäßen Verfahren zur Befeuchtung einer Brennstoffzellenmembran ist das Kathodenabgas einer Brennstoffzelle über eine Membran mit einer Anoden- oder Kathodengaszufuhr, z.B. Aussenluft oder Sauerstoff, verbunden, um Wasserdampf durch ein Konzentrationsgefälle der Feuchtigkeit auf beiden Seiten der Membran vom Kathodenabgas zur Gas- bzw. Kathodengaszufuhr zu übertragen. Durch die Nutzbarmachung der Permeation von Wassermolekülen durch die Membran kann ein Wasserdampftransport ohne äußeren Antrieb bzw. ohne zusätzlichen Energieaufwand erfolgen, ohne daß eine Vermischung des Kathodenabgases mit dem der Brennstoffzelle zugeführten Gas stattfindet.

Bevorzugt wird der Durchgang von Wasserdampf durch die Membran durch Betätigung einer Vakuumpumpe gefördert. Durch Vakuumerzeugung kann das Konzentrationsgefälle aufrechterhalten werden. Dadurch ergibt sich eine besonders hohe und gleichmäßige Übertragungsrate für den Wasserdampf.

Das Konzentrationsgefälle kann auch durch ständigen Austausch von Gas auf einer Seite der Membran aufrechterhalten werden. Dies hat den Vorteil, das keine Pumpe notwendig ist. Diese Lösung ist besonders kostengünstig, da Bauteile eingespart werden und im Betrieb der Energieaufwand reduziert ist.

Bevorzugt wird Feuchtigkeit in einem Behälter bzw. Wassertank zwischengespeichert und kann dann genau dosiert an die Kathodengaszufuhr übertragen werden.

Nachfolgend wird die vorliegende Erfindung beispielhaft beschrieben.

Dabei zeigt:
Fig. 1 eine Ausführungsform der Erfindung schematisch darstellt,
Fig. 2 eine zweite Ausführungsform und
Fig.3 eine dritte Ausführungsform der Erfindung.

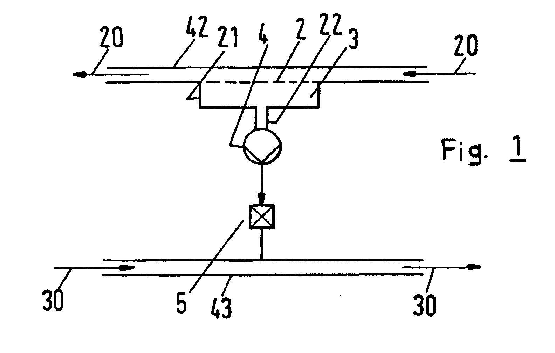

Die Figur 1 zeigt eine erfindungsgemäße Befeuchtungsvorrichtung 1, die zwischen der Kathodenabluft 20 von einer Brennstoffzelle und der Kathodenzuluft 30 zur Brennstoffzelle hin angeordnet ist. Die Brennstoffzelle ist in dieser Figur nicht dargestellt. Eine feuchtigkeitsdurchläßige Membran 2 ist in einem Gehäuse 21 befestigt und so angeordnet, daß die Kathodenabluft 20 auf einer Seite der Membran 2 vorbeigeführt wird. Auf der gegenüberliegenden Seite der Membran 2 befindet sich ein Raum 3, der durch die Membran 2 und das Gehäuse 21 begrenzt wird. Vom Raum 3 zweigt eine Verbindung 22 in Form einer Gasleitung ab, die den Raum 3 über eine Vakuumpumpe 4 und eine Dosiereinheit 5 mit der Kathodenzuluft 30 verbindet.

Beim Betrieb der Brennstoffzelle ist das Reaktionsprodukt Wasser in der Kathodenabluft enthalten. Daher ist die Kathodenabluft 20 warm und feucht. Die Strömumgsrichtung der Kathodenabluft 20 und der Kathodenzuluft 30 ist in der Figur 1 jeweils durch die Richtung der Pfeile gekennzeichnet. Die Kathodenzuluft 30 bzw. die Außenluft, die als Kathodenzuluft verwendet wird, ist deshalb sehr viel trockener als die Kathodenabluft 20. Daher besteht ein Konzentrationsgefälle der Feuchtigkeit zwischen beiden Seiten der Membran 2. Aufgrund von Permeation durchdringt der Wasserdampf beim Betrieb der Brennstoffzelle die Membran 2 und wird somit von der Kathodenabluft 20 durch die Leitung 22 zur Kathodenzuluft 30 hin transportiert.

Durch die Vakuumpumpe 4 wird das Konzentrationsgefälle aufrecht erhalten, so daß der Wasserdampftransport kontinuierlich erfolgen kann.

Durch die Dosiereinheit 5 wird der Wasserdampf, der der Kathodenabluft 20 durch die Membran 2 entnommen wurde, genau dosiert, d.h. in der vom jeweiligen Betriebszustand der Brennstoffzelle abhängigen benötigten Menge der Kathodenzuluft 30 zugeführt. Hierzu ist die Dosiereinheit 5 mit einem in dieser Figur nicht dargestellten Regelkreis verbunden, der die Feuchtigkeit der Kathodenzuluft mißt und dementsprechend die benötigte Wassermenge einstellt.

In einer weiteren Ausführungsform ist anstelle der Vakkuumpumpe 4 eine Gastauschvorrichtung vorgesehen, die die Luft im Raum 3 ständig austauscht, um das notwendige Konzentrationsgefälle, das den Wasserdampfaustausch antreibt, aufrechtzuerhalten. Hierzu führt eine Leitung zur Kathodengaszufuhr in den Raum 3 und von dort weiter zur Brennstoffzelle. Im Betrieb wird daher durch den Austausch von Luft bzw. Sauerstoff im Raum 3 ein Konzentrationsgefälle zwischen beiden Seiten der Membran 2 aufrechterhalten. In einer weiteren Ausführungsform der Erfindung ist die Membran 2 ein Teil der Wandung der Kathodenabluft- bzw. -abgasleitung und ein Teil der Wandung der Kathodengaszufuhrleitung, so dass auf einer Seite der Membran 2 die Kathodenabluft 20 vorbeiströmt und auf der anderen Seite der Membran 2 die Kathodenzuluft 30 vorbeiströmt. Diese Lösung ist besonders platzsparend und kostengünstig.

In der in der Figur gezeigten, besonders bevorzugten Ausführungsform ist das Membrangehäuse 21 einstückig mit einer Kathodenabluftleitung 42 ausgestaltet. Die Kathodenabluftleitung 42 und ein Abschnitt einer Kathodenzuluftleitung 43 sind zum Einsetzen der Befeuchtungsvorrichtung 1 in die entsprechenden zugehörigen Leitungen der Brennstoffzelle vorgesehen. Somit kann die Befeuchtungsvorrichtung 1 leicht und mit geringem Aufwand an die Brennstoffzelle angeschlossen werden.

Ein zusätzlicher Behälter zur Zwischenspeicherung des entnommenen Wassers bzw. Wasserdampfs ist in der Figur nicht dargestellt. Der Behälter bzw. Wassertank bietet den Vorteil, daß stets ein Vorrat zur Befeuchtung der Kathodenzuluft 30 vorhanden ist. Die dem feuchten Luftstrom bzw. der Kathodenabluft 20 entnommene Feuchtigkeit wird in dem Wassertank gesammelt und bei Bedarf der Kathodenzuluft 30 zugeführt.

Allgemein ist die Befeuchtungsvorrichtung 1 zur Entnahme von Wasserdampf bzw. Feuchtigkeit aus dem Kathodenabgas bzw. der Kathodenabluft und zur Übertragung der Feuchtigkeit bzw. des Wassers an das Gas bzw. die Aussenluft, die der Kathode der Brennstoffzelle zugeführt wird, geeignet. Die Erfindung hat den Vorteil, daß eine Entfeuchtung ohne eine Kondensationsschleife erfolgt, d. h., es ist kein Abkühlen und Aufheizen der Kathodenluft notwendig, um den Kondensationspunkt zu erreichen. Dadurch wird Energie eingespart.

Weiterhin ist die Konstruktion der Befeuchtungsvorrichtung 1 einfach und dadurch wenig störanfällig. Die Nutzung einer Entfeuchtungsmembran, wie sie aus vielfältigen Anwendungen bekannt ist, zum Austausch des Wasserdampfes bzw. der Feuchtigkeit zwischen der Kathodenabluft 20 und der Kathodenzuluft 30 bietet eine zuverlässige Befeuchtung der Membran-Elektroden-Einheit der Brennstoffzelle, die wenig aufwendig und kostengünstig ist.

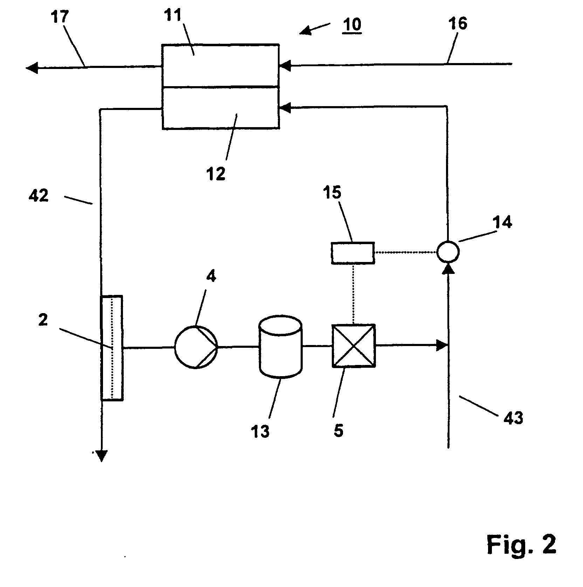

Figur 2 zeigt schematisch eine Brennstoffzelle 10, mit einem Anodenteil 11 und einem Kathodenteil 12, die mit einer erfindungsgemäßen Befeuchtungsvorrichtung verbunden sind.
Dem Anodenteil 11 wird gasförmiger Brennstoff (z.B. reiner Wasserstoff als Anodengas) durch die Anodenzuleitung 16 zugeführt. Das Anodenabgas verläßt den Anodenteil 11 durch die Anodengasableitung 17. Die Membran 2 der Befeuchtungsvorrichtung ist mit der Kathodengasableitung 42 verbunden, und zwar in derselben Weise wie bei Figur 1. Auch hierbei ist eine Vakuumpumpe 4 und eine Dosiereinheit 5 vorgesehen. Zusätzlich ist ein Behälter 13 in die Leitung von der Vakuumpumpe 4 zur Dosiereinheit 5 eingefügt, der zum Speichern von Wasser und/oder Wasserdampf dient. Die Dosiereinheit 5 setzt dem Kathodengas (Frischluft) Wasser/Dampf zu, um das Kathodengas zu befeuchten, dass durch die Kathodenzuluftleitung 43 in den Kathodenteil 12 fließt. Wasser/Dampf wird vom Kathodenabgas zurückgewonnen durch die Membrane 2 und die Vakuumpumpe 4. In Strömungsrichtung hinter dem Befeuchtungspunkt ist ein Feuchtigkeitssensor 14 in die Kathodenzuluftleitung 43 eingefügt, um den aktuellen Feuchtigkeitsgrad des Kathodengases zu bestimmen. Der Feuchtigkeitssensor ist elektrisch mit der Regeleinheit 15 verbunden, die die Dosiereinheit 5 dahingehend beeinflußt, dass die Feuchtigkeit des Kathodengases auf einem vorgegebenen Wert bleibt.

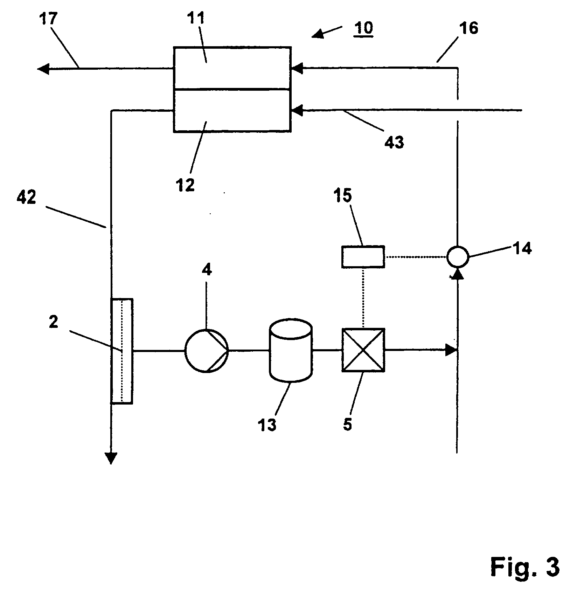

Die Figur 3 zeigt eine andere Ausführung der Erfindung, die allerdings der nach Figur 2 sehr ähnlich ist. Der einzige Unterschied ist darin zu sehen, dass die Dosiereinheit 5 und der Feuchtigkeitssensor 14 anstatt in die Kathodenzuluftleitung 43 in die Anodengaszuleitung 16 eingefügt sind.

### Bezugszeichenliste

- 1: Befeuchtungsvorrichtung
- 2: Membran
- 3: Raum
- 4: Vakuumpumpe
- 5: Dosiereinheit
- 10: Brennstoffzelle
- 11: Anodenteil
- 12: Kathodenteil
- 13: Behälter
- 14: Feuchtigkeitssensor
- 15: Regeleinheit
- 16: Anodengaszuleitung
- 17: Anodengasableitung

- 20: Kathodenabluft bzw. -abgas
- 21: Gehäuse
- 22: Verbindung zur Kathodenzuluft
- 30: Kathodenzuluft bzw. Gaszufuhr
- 42: Kathodenabluftleitung
- 43: Kathodenzuluftleitung

## Patentansprüche

1. Brennstoffzelle, mit einer Befeuchtungsvorrichtung, aufweisend eine semipermeable Membran (2), die an das Kathodenabgas (20) der Brennstoffzelle gekoppelt ist, wobei sich das Kathodenabgas (20) auf einer Seite der Membran (2) befindet,
**dadurch gekennzeichnet,**
**dass** die Befeuchtungseinrichtung ein Verbindungselement (22) aufweist, das zum einen eine Gasleitung aufweist und die andere Seite der Membran (2) leitungsmäßig mit der Anoden- oder Kathodengaszufuhr (30) zur Brennstoffzelle verbindet,
so dass im Betrieb Wasserdampf die Membran (2) durchdringt, um das zur Brennstoffzelle geführte Gas zu befeuchten,
und das zum anderen eine Dosiereinheit (5) zur Befeuchtung des Gastroms zur Kathode aufweist.

2. Brennstoffzelle nach Anspruch 1,
**dadurch gekennzeichnet,**
**dass** das Verbindungselement (22) eine Vakuumpumpe (4) zur Aufrechterhaltung eines Konzentrationsgefälles der Feuchtigkeit zwischen den beiden Seiten der Membran (2) aufweist.

3. Brennstoffzelle nach Anspruch 1 oder Anspruch 2,
**dadurch gekennzeichnet,**
**dass** das Verbindungselement (22) einen Behälter zur Aufnahme von Wasserdampf und/oder Wasser aufweist.

4. Brennstoffzelle nach einem der Ansprüche 1 bis 3,
**dadurch gekennzeichnet,**
**dass** die Dosiereinheit (5) mit einem Regelkreis verbunden ist.

5. Verfahren zur Befeuchtung einer Brennstoffzellenmembran, wobei
Kathodenabgas (20) von der Brennstoffzelle an einer Seite der Membran (2) vorbeigeführt wird und Wasserdampf durch ein Konzentrationsgefälle der Feuchtigkeit auf die andere Seite der Membran (2) gelangt und der Wasserdampf auf das zur Brennstoffzelle geführte Gas übertragen wird,
**dadurch gekennzeichnet,**
**dass** der Wasserdampf von der anderen Seite der Membran (2) über ein eine Gasleitung und eine Dosiereinheit (5) aufweisendes Verbindungselement (22) zur Anoden- oder Kathodengaszufuhr (30) übertragen wird.

6. Verfahren nach Anspruch 5,
**dadurch gekennzeichnet,**
**dass** der Durchgang von Wasserdampf durch die Membran (2) durch Betätigung einer Vakuumpumpe (4) unterstützt wird.

7. Verfahren nach Anspruch 5 oder 6,
**dadurch gekennzeichnet,**
**dass** das Konzentrationsgefälle durch eine Vakuumpumpe (4) aufrechterhalten wird.

8. Verfahren nach einem der Ansprüche 5 bis 7,
**dadurch gekennzeichnet,**
**dass** das Konzentrationsgefälle durch Austausch von Gas aufrechterhalten wird.

9. Verfahren nach einem der Ansprüche 5 bis 8,
**dadurch gekennzeichnet,**
**dass** Feuchtigkeit in einem Behälter zwischengespeichert wird.

## Claims

1. Fuel cell, having a dampening device, comprising a semipermeable membrane (2) which is coupled to the exhaust cathode gas (20) of the fuel cell, the exhaust cathode gas (20) being located on one side of the membrane (2), **characterised in that** the dampening device comprises a connecting element (22) which on the one hand comprises a gas pipe and connects the other side of the membrane (2) by piping to the anode or cathode gas supply (30) to the fuel cell, so that during operation water vapour passes through the membrane (2) in order to dampen the gas being carried to the fuel cell, and on the other hand comprises a metering unit (5) for dampening the current of gas to the cathode.

2. Fuel cell according to claim 1, **characterised in that** the connecting element (22) comprises a vacuum pump (4) for maintaining a concentration gradient of moisture between the two sides of the membrane (2).

3. Fuel cell according to claim 1 or claim 2, **characterised in that** the connecting element (22) comprises a container for receiving water vapour and/or water.

4. Fuel cell according to one of claims 1 to 3, **characterised in that** the metering unit (5) is connected to a regulating circuit.

5. Process for dampening a fuel cell membrane, wherein exhaust cathode gas (20) is conveyed from the fuel cell past one side of the membrane (2) and water vapour reaches the other side of the membrane (2) as a result of a concentration gradient of the moisture and the water vapour is transmitted to the gas being carried to the fuel cell, **characterised in that** the water vapour is transferred from the other side of the membrane (2) via a connecting element (22) for supplying anode or cathode gas (30) comprising a gas pipe and a metering unit (5).

6. Process according to claim 5, **characterised in that** the transition of water vapour through the membrane (2) is assisted by the actuation of a vacuum pump (4).

7. Process according to claim 5 or 6, **characterised in that** the concentration gradient is maintained by a vacuum pump (4).

8. Process according to one of claims 5 to 7, **characterised in that** the concentration gradient is maintained by the exchange of gas.

9. Process according to one of claims 5 to 8, **characterised in that** moisture is temporarily stored in a container.

## Revendications

1. Pile à combustible comportant un dispositif d'humidification et présentant une membrane (2) semi-perméable qui est couplée au gaz brûlé de la cathode (20) de la pile à combustible, le gaz brûlé de la cathode (20) se trouvant d'un côté de la membrane (2),
**caractérisée en ce que**
l'installation d'humidification présente un élément de liaison (22) qui d'une part présente une conduite de gaz et relie à l'aide de conduites l'autre côté de la membrane (2) à l'arrivée de gaz (30) de l'anode ou de la cathode en direction de la pile à combustible, de sorte que la vapeur d'eau traverse la membrane (2) pendant le fonctionnement afin d'humidifier le gaz conduit à la pile à combustible,
et qui d'autre part présente une unité de dosage (5) destinée à humidifier le courant de gaz en direction de la cathode.

2. Pile à combustible selon la revendication 1,
**caractérisée en ce que**
l'élément de liaison (22) présente une pompe à vide (4) destinée à maintenir un gradient de concentration de l'humidité entre les deux côtés de la membrane (2).

3. Pile à combustible selon la revendication 1 ou la revendication 2,
**caractérisée en ce que**
l'élément de liaison (22) présente un récipient destiné à recevoir de la vapeur d'eau et/ou de l'eau.

4. Pile à combustible selon l'une des revendications 1 à 3,
**caractérisée en ce que**
l'unité de dosage (5) est reliée à un circuit de régulation.

5. Procédé pour humidifier une membrane de pile à combustible, selon lequel le gaz brûlé de la cathode (20) provenant de la pile à combustible est acheminé sur un côté de la membrane (2) et la vapeur d'eau parvient de l'autre côté de la membrane (2) par un gradient de concentration de l'humidité et la vapeur d'eau est transmise au gaz conduit à la pile à combustible,
**caractérisé en ce que**
la vapeur d'eau provenant de l'autre côté de la membrane (2) est transmise à l'arrivée de gaz de l'anode ou de la cathode (30) par l'intermédiaire d'un élément de liaison (22) qui présente une conduite de gaz et une unité de dosage (5)

6. Procédé selon la revendication 5,
**caractérisé en ce que**
le passage de la vapeur d'eau à travers la membrane (2) est assisté par la manoeuvre d'une pompe à vide (4).

7. Procédé selon la revendication 5 ou 6,
**caractérisé en ce que**
le gradient de concentration est maintenu par une pompe à vide (4).

8. Procédé selon l'une des revendications 5 à 7,
**caractérisé en ce que**
le gradient de concentration est maintenu par échange de gaz.

9. Procédé selon l'une des revendications 5 à 8,
**caractérisé en ce que**
l'humidité est temporairement stockée dans un récipient.
